(19) Europäisches Patentamt / European Patent Office / Office européen des brevets

(11) **EP 3 964 868 A1**

(12) **EUROPEAN PATENT APPLICATION**

(43) Date of publication:
**09.03.2022 Bulletin 2022/10**

(21) Application number: **20194819.7**

(22) Date of filing: **07.09.2020**

(51) International Patent Classification (IPC):
**G01S 17/894** (2020.01)    **G01S 7/4915** (2020.01)
**G01S 17/36** (2006.01)

(52) Cooperative Patent Classification (CPC):
**G01S 17/894; G01S 7/4915; G01S 17/36**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Infineon Technologies AG
85579 Neubiberg (DE)**

(72) Inventors:
• **SCHOENLIEB, Armin
8054 Seiersberg-Pirka (AT)**
• **PLANK, Hannes
8010 Graz (AT)**

(74) Representative: **2SPL Patentanwälte PartG mbB
Landaubogen 3
81373 München (DE)**

(54) **METHOD AND APPARATUS FOR TIME-OF-FLIGHT SENSING**

(57)    A method for time-of-flight sensing of a scene is provided. For at least one pixel position, the method includes performing at least one time-of-flight measurement using a first modulation frequency in order to obtain at least one first measurement value for the pixel position. Further, the method includes for the at least one pixel position performing at least one time-of-flight measurement using a second modulation frequency in order to obtain at least one second measurement value for the pixel position. The method additionally includes determining an estimate of a distance value of the pixel position based on the at least one first measurement value and the at least one second measurement value using a mapping function.

Fig. 1

**Description**

**Field**

The present disclosure relates to Time-of-Flight (ToF) sensing. In particular, examples relate to a method and an apparatus for ToF sensing.

**Background**

ToF cameras are conventionally covered by a cover glass in order to protect the imager and the illumination unit against the outside world. However, light emitted by the illumination unit is partly reflected by the cover glass.
Since the light reflected by the cover glass mixes with wanted light reflections from the outside world, erroneous measurements are obtained.
Hence, there may be a demand for improved ToF sensing.

**Summary**

The demand may be satisfied by the subject matter of the appended claims.
An example relates to a method for ToF sensing of a scene. For at least one pixel position, the method comprises performing at least one ToF measurement using a first modulation frequency in order to obtain at least one first measurement value for the pixel position. Further, the method comprises for the at least one pixel position performing at least one ToF measurement using a second modulation frequency in order to obtain at least one second measurement value for the pixel position. The method additionally comprises determining an estimate of a distance value of the pixel position based on the at least one first measurement value and the at least one second measurement value using a mapping function.
Another example relates to an apparatus for ToF sensing of a scene. The apparatus comprises a ToF sensor comprising a plurality of pixels. The ToF sensor is for at least one pixel position configured to a perform at least one ToF measurement using a first modulation frequency in order to obtain at least one first measurement value for the pixel position, and to perform at least one ToF measurement using a second modulation frequency in order to obtain at least one second measurement value for the pixel position. Additionally, the apparatus comprises a processing circuit configured to determine an estimate of a distance value of the pixel position based on the at least one first measurement value and the at least one second measurement value using a mapping function.

**Brief description of the Figures**

Some examples of apparatuses and/or methods will be described in the following by way of example only, and with reference to the accompanying figures, in which

Fig. 1 illustrates a flowchart of an example of a method for ToF sensing;

Fig. 2 illustrates exemplary correlation functions for performing one ToF measurement using a first modulation frequency and one ToF measurement using a second modulation frequency;

Fig. 3 illustrates exemplary correlation functions for performing two ToF measurements using a first modulation frequency and two ToF measurements using a second modulation frequency;

Fig. 4 illustrates exemplary correlation functions for performing one ToF measurement using a first modulation frequency, one ToF measurement using a second modulation frequency and one ToF measurement using a third modulation frequency;

Fig. 5 illustrates exemplary correlation functions for performing one ToF measurement using a first modulation frequency, one ToF measurement using a second modulation frequency and one Coded Modulation (CM) ToF measurement; and

Fig. 6 illustrates an example of an apparatus for ToF sensing.

**Detailed Description**

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly nor implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

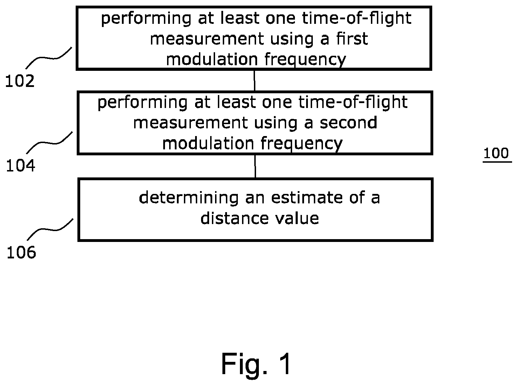

**Fig. 1** illustrates a flowchart of an example of a method 100 for ToF sensing of a scene. The method 100 will be described in the following for one of a plurality of pixels of a ToF sensor used for capturing the scene. The below described principles for this pixel position may equivalently be used for the other pixel positions of the ToF sensor.

The method 100 comprises performing 102 at least one ToF measurement using a first modulation frequency to obtain at least one first measurement value for the pixel position. In ToF measurements, the scene is illuminated by an illumination element of the ToF sensor based on an illumination signal exhibiting an alternating series of high and low pulses of equal or varying duration (length). Similarly, a reference signal used for driving electronic circuitry in a light capturing element of the ToF sensor for measuring the reflected light at the pixel position exhibits an alternating series of high and low pulses of equal or varying duration (length) in ToF measurements. It is to be noted that the illumination signal and the reference signal used for a ToF measurement may be identical, time-shifted (phase-shifted) with respect to each and/or be different from each other. For each ToF measurement, at least one first measurement value for the pixel position is obtained.

The method 100 additionally comprises performing 104 at least one ToF measurement using a different second modulation frequency to obtain at least one second measurement value for the pixel position.

In other words, the illumination and reference signals used in the at least one ToF measurement for obtaining obtain the at least one first measurement value are modulated with the first modulation frequency, whereas the illumination and reference signals used in the at least one ToF measurement for obtaining obtain the at least one second measurement value are modulated with the second modulation frequency. The modulation frequency denotes the frequency with which the respective signal is modulated. The second modulation frequency may be lower than the first modulation frequency. For example, the second modulation frequency may be half of the first modulation frequency. The illumination and reference signals used in the at least one ToF measurement for obtaining obtain the at least one first measurement value may, e.g., be modulated with a sine or square wave exhibiting the first modulation frequency, whereas the illumination and reference signals used in the at least one ToF measurement for obtaining obtain the at least one second measurement may be modulated with a sine or square wave exhibiting the second modulation frequency.

In general, any number of ToF measurements using the first modulation frequency and any number of ToF measurements using the second modulation frequency may be performed. For example, exactly one (i.e. a single) ToF measurement using the first modulation frequency may be performed to obtain one first measurement value for the pixel position, and exactly one (i.e. a single) ToF measurement using the second modulation frequency may be performed to obtain one second measurement value for the pixel position. Alternatively, exactly two ToF measurements using the first modulation frequency may be performed to obtain two first measurement values for the pixel position, and exactly two ToF measurements using the second modulation frequency may be performed to obtain two second measurement values for the pixel position. However, also any other number of ToF measurements using the first modulation frequency and ToF measurement using the second modulation frequency may be used in other examples.

Further, the method 100 comprises determining 106 an estimate of (for) a distance value of the pixel position based on the at least one first measurement value and the at least one second measurement value using a mapping function. The estimate of the distance value indicates an approximation of a distance of an image plane as defined by the pixels of the ToF sensor to an object in the scene reflecting the light back to the pixel of the ToF sensor at the pixel position. The mapping function is a function that assigns one of a plurality of candidate (potential) estimates of the distance value to an input (argument) of the mapping function. The input (argument) of the mapping function is based on the at least one first measurement value and the at least one second measurement value. For example, the at least one first measurement value and the at least one second measurement value may be combined in order to determine the input (argument) of the mapping function.

The method 100 may allow to obtain the estimate of the distance value using ToF measurements for different modulation frequencies. Compared to conventional approaches (e.g. capturing 8 ToF images for the same modulation frequency), the combination of ToF measurements for different modulation frequencies may allow to reduce the number of ToF measurements and resolve distance ambiguities.

The method 100 may further comprise outputting the estimate of the distance value. Based on the estimate of the distance value, a final distance value may be determined. The distance value denotes the distance between an object in the scene and the image plane defined by the ToF sensor's light capturing element. Therefore, the method 100 may, e.g., further comprise determining the distance value by applying at least one error correction to the estimate of the distance value. For example, one or more error corrections for compensating errors in the signal path for supplying the reference signal to the pixel may be applied. Accordingly, fixed-pattern phase noise in the ToF sensor may be reduced (compensated). Alternatively or additionally, one or more error corrections for compensating temperature-dependent errors may be applied. For example, a correction factor derived from a temperate-dependent error correction function may be applied to the estimate of the distance value. Further alternatively or additionally, one or more error corrections for compensating the so-called wiggling error may be applied. The wiggling error describes the deviation of the actual behavior of the ToF sensor from the underlying depth calculation model (e.g. as represented by the mapping function). Still further alternatively or additionally, one or more error corrections for compensating optical errors of the optics of the ToF sensor may be applied. For example, lens parameters may be calibrated if the distance value is to be used for a three-dimensional (3D) point cloud representation.

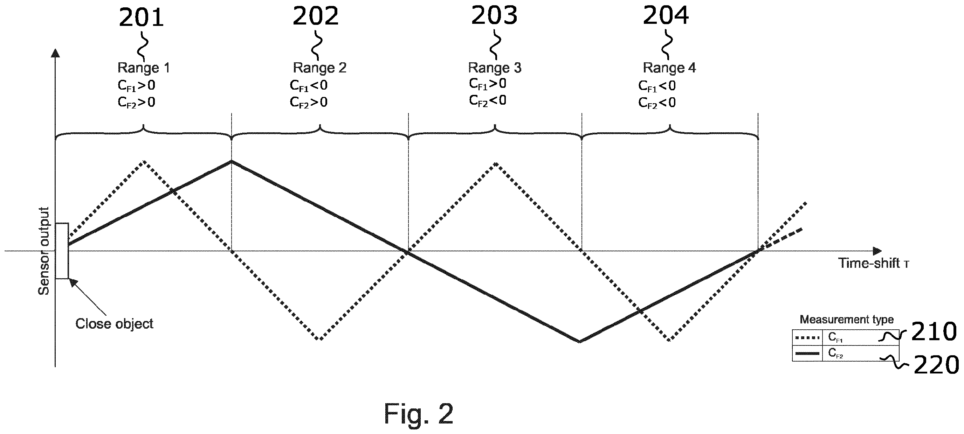

Fig. 1 together with the above explanations highlighted the basics of the proposed technology for ToF sensing. In the following, further details of the method 100 will be described with reference to Figs. 2 to 6.

**Fig. 2** illustrates exemplary correlation functions 210 and 220 for the case of performing one ToF measurement using the first modulation frequency and one ToF measurement using the second modulation frequency. The correlation function 210 illustrates the expected output of the ToF sensor for the ToF measurement using the first modulation frequency depending on the distance between the ToF sensor and the object in the scene reflecting the light of the ToF sensor. Similarly, the correlation function 220 illustrates the expected output of the ToF sensor for the ToF measurement using the second modulation frequency. A sample of the respective one of correlation function 210 and the correlation function 220 is, hence, obtained for each of the one ToF measurement using the first modulation frequency and the one ToF measurement using the second modulation frequency as measurement value for the respective measurement.

It is to be noted that the correlation functions 210 and 220 illustrated in Fig. 2 do not consider the decrease in signal strength with increasing distance. Further, it is to be noted that the exposure times used for the one ToF measurement using the first modulation frequency and the one ToF measurement using the second modulation frequency may be set to arbitrary values. No specific ratio between the exposure times used for the one ToF measurement using the first modulation frequency and the one ToF measurement using the second modulation frequency is required. In general, the exposure time used for the one ToF measurement using the second modulation frequency may be equal, shorter or longer than the exposure time used for the one ToF measurement using the first modulation frequency. The exposure times may be selected in order to minimize the noise of the ToF measurements. For example, the exposure times may be selected based on a simulation with a noise model or reference (calibration) measurements.

The output of the ToF sensor for the pixel position is related to the correlation between the illumination signal used by the illumination element for illuminating the scene and the reference signal used for driving the light capturing element. The correlation function $c_{F1}(\tau)$ of the one ToF measurement using the first modulation frequency and the correlation function $c_{F2}(\tau)$ of the one ToF measurement using the second modulation frequency both represent the value of the respective correlation at different time-shifts $\tau$ between the light (e.g. a light pulse) emitted by the illumination element based on the illumination signal for illuminating the scene and the reflected light (e.g. a light pulse) received by the light capturing element.

For example, the light capturing element may comprises a Photonic Mixer Device (PMD) for measuring the reflected light at the pixel position. The output of the PMD is the voltage difference between two capacitors A and B of the PMD and indicates a sample of the respective correlation function $c_{F1}(\tau)$ or $c_{F2}(\tau)$. The correlation functions $c_{F1}(\tau)$ and $c_{F2}(\tau)$ may, e.g., be defined within a normalized value range of [-1; 1]. However, it is to be noted that other value ranges may be used as well. In other examples, normalization may be omitted.

Assuming an ideal measurement without errors, the value of the respective correlation function may, e.g., be $c_{F1/F2}(\tau)$ = -1 if all charges are integrated into capacitor B. The value of the respective correlation function may, e.g., be $c_{F1/F2}(\tau)$ = 0 if all charges are equally distributed between the capacitors A and B. Further, the value of the respective correlation function may, e.g, be $c_{F1/F2}(\tau)$ = 1 if all charges are integrated into capacitor A.

Among other parameters, the time-shift $\tau$ is influenced by the time lag (shift time) between the illumination signal and the reference signal. Further, the time-shift $\tau$ is influenced by the distance $d$ the light travels from the illumination element to the object in the scene and back to the pixel of the light capturing element. The distance $d$ further also influences the light intensity $I$ of the light received by the light capturing element (e.g. the light intensity $I$ decreases for increasing distance $d$).

By adjusting the time lag between the illumination signal and the reference signal, the correlation functions $c_{F1}(\tau)$ and $c_{F2}(\tau)$ may be adjusted (shifted). For example, the time lag between the illumination signal and the reference signal may be adjusted by delaying one or both of the illumination signal and the reference signal. For example, a respective (e.g. adjustable) delay element may be used in the respective signal path of at least one of the illumination signal and the reference signal for adjusting the time lag between the illumination signal and the reference signal to a target (desired) value.

Shifting the correlation functions $c_{F1}(\tau)$ and $c_{F2}(\tau)$ by adjusting the time lag between the illumination signal and the reference signal may be advantageous for various reasons. For example, it may allow to reduce the sensitivity of the ToF sensor (e.g. to zero) at one or more target distances. This is illustrated in Fig. 2. In Fig. 2, a respective absolute value of the correlation functions 210 and 220 is substantially zero for a distance of substantially zero (indicated by corresponding time shift $\tau$ = 0) as both correlation functions 210 and 220 exhibit a zero crossing at this distance. Since the absolute values of the correlation functions 210 and 220 are both substantially zero for this distance, the ToF sensing is not sensitive to reflections coming from objects located at this distance. Similarly, the sensitivity of the ToF sensing may be effectively reduced to zero if the respective absolute value of correlation functions 210 and 220 is small at this distance. The sensitivity of the ToF sensing may be effectively reduced to zero at any other desired distance by shifting the zero crossings of the correlation functions 210 and 220 to or near to the desired distance. In other words, the correlation functions 210 and 220 may be adjusted such that a respective absolute value of the correlation functions 210 and 220 is smaller than a threshold value (close to zero and, e.g., defined by the noise level of the ToF sensor) for a predetermined (desired, target) distance.

The ToF sensor is usually covered by an element such as a cover glass or a translucent display (e.g. an Organic Light Emitting Diode, OLED, display). The light emitted by the ToF sensor is in part reflected by the element covering the ToF sensor and may, hence, cause erroneous measurements. By adjusting the correlation functions 210 and 220 such that a respective absolute value of the correlation functions 210 and 220 is smaller than a threshold value (close to zero and, e.g., defined by the noise level of the ToF sensor) for the distance at which the element covering the ToF sensor is arranged, the erroneous measurements caused by the element covering the ToF sensor may be mitigated or even fully compensated as the ToF sensing is effectively not sensitive to reflections coming from this distance.

In the example of Fig. 2, the correlation function $c_{F1}(\tau + tl_1)$ is generated using the first modulation frequency with an exposure time $E_{F1}$. The correlation function $c_{F2}(\tau + tl_2)$ is generated using the second modulation frequency with an exposure time $E_{F2}$. In the ToF images captured for the respective measurements, each pixel comprises a respective sample $C_{F1}$ or $C_{F2}$ of these correlation functions at the time shift $\tau$. The relative time lag $tl_1 - tl_2$ between the correlation functions is chosen such that the course of the ratio of the correlation functions is strictly monotonic decreasing or strictly monotonic increasing in each of the distance ranges 201 to 204. The four distance ranges 201 to 204 define the measurement range of the ToF sensor. In particular, the measurement range of the ToF sensor is determined by the time-shift $\tau$ that corresponds to the duration of one period of the correlation function $c_{F2}(\tau)$ of the one ToF measurement using the second modulation frequency. In the example of Fig. 2, four distance ranges are shown as the second modulation frequency is half of the first frequency. However, it is to be noted that the number of distance ranges depends on the frequency ratio between the first and the second modulation frequency. If it is desired (or required) to remove the influence of close objects such as a cover glass, the time shifts $\tau$ is selected such that that zero crossings of the two correlation function are located at the distance (position) of the close object.

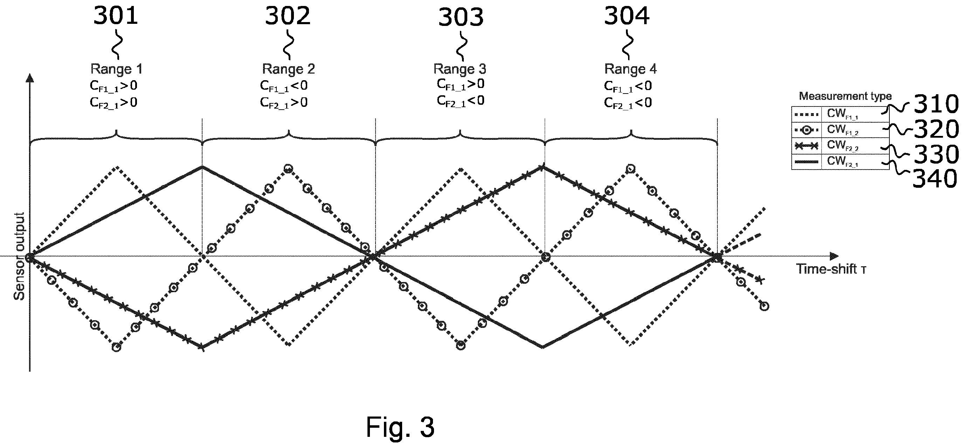

In some examples, one additional ToF measurement using the first modulation frequency and one additional ToF measurement using the second modulation frequency may be taken. In other words, two ToF measurements using the first modulation frequency may be performed to obtain two first measurement values for the pixel position, and two ToF measurements using the second modulation frequency may be performed to obtain two second measurement values for the pixel position. **Fig. 3** illustrates exemplary correlation functions 310, 320, 330 and 340 for the case of performing two ToF measurement using the first modulation frequency and two ToF measurement using the second modulation frequency.

As can be seen from Fig. 3, the correlation functions 310 and 320 of the two ToF measurements using the first modulation frequency are phase-shifted by 180° with respect to each other. Similarly, the correlation functions 330 and 340 of the two ToF measurements using the second modulation frequency are phase-shifted by 180° with respect to each other. The correlation functions 310 and 320 of the two ToF measurements using the first modulation frequency are axially symmetric, and also the correlation functions 330 and 340 of the two ToF measurements using the second modulation frequency are axially symmetric. In other words, the correlation functions of the additional measurements are inverted to their counterparts. Using two ToF measurements at the first modulation frequency and two ToF measurements at the second modulation frequency may allow to mitigate (compensate or eliminate) certain errors. For example, depending on the implementation of the circuitry in the pixel of the light-receiving element, background light from the scene may cause an offset in the measurement that may be compensated if the two ToF measurements using the first modulation frequency and two ToF measurements using the second modulation frequency are taken.

Again, the course of the ratio of each of the correlation functions 310 and 320 of the two ToF measurement using the first modulation frequency to each of the correlation functions 330 and 340 of the two ToF measurements using the second modulation frequency is either strictly monotonic decreasing or strictly monotonic increasing in in each of the distance ranges 301 to 304.

The position of the zero crossings of the correlation functions 310, 320, 330 and 340 may be adjusted similarly to what is described above for Fig. 2.

In the following, further details about how the estimate for the distance is determined will be described.

The at least one first measurement value $C_{F1}$ for the at least one ToF measurement using the first modulation frequency is proportional to the amount of light received at the pixel position which depends on the light intensity $I$ and the exposure time $E_{F1}$ for the at least one ToF measurement using the first modulation frequency: Assuming that the light is reflected from a single object in the scene, the at least one first measurement value $C_{F1}$ may be expressed as follows:

$$C_{F1} = c_{F1}(\tau) \cdot E_{F1} \cdot I \qquad (1)$$

Similarly, the at least one second measurement value $C_{F2}$ for the at least one ToF measurement using the second modulation frequency is proportional to the amount of light received at the pixel position which depends on the light intensity $I$ and the exposure time $E_{F2}$ for the at least one ToF measurement using the second modulation frequency: Assuming that the light is reflected from a single object in the scene, the at least one second measurement value $C_{F2}$ may be expressed as follows:

$$C_{F2} = c_{F2}(\tau) \cdot E_{F2} \cdot I \qquad (2)$$

For determining the estimate of the distance value of the pixel position, the at least one first measurement value $C_{F1}$ and the at least one second measurement value $C_{F2}$ are set in relation. In particular, the method 100 may further comprise determining a ratio value (ToF ratio) $Q$ based on a ratio of a first value $C_1$ related to the at least one first measurement value $C_{F1}$ to a second value $C_2$ related to the at least one second measurement value $C_{F2}$:

$$Q \sim \frac{C_1}{C_2} \qquad (3)$$

The first value $C_1$ is based on the at least one first measurement value $C_{F1}$, whereas the second value $C_2$ is based on the at least one second measurement value $C_{F2}$. For example, if exactly one ToF measurement using the first modulation frequency and one ToF measurement using the second modulation frequency are performed, the first value $C_1$ may be the one first measurement value $C_{F1}$ obtained for the one ToF measurement using the first modulation frequency, and the second value $C_2$ may be the one second measurement value $C_{F2}$ obtained for the one ToF measurement using the second modulation frequency. In other words, $C_1 = C_{F1}$ and $C_2 = C_{F2}$ if exactly one ToF measurement using the first modulation frequency and one ToF measurement using the second modulation frequency are performed. If two ToF measurements using the first modulation frequency and two ToF measurements using the second modulation frequency are performed, the first value $C_1$ may correspond to the difference between the two first measurement values $C_{F1\_1}$ and $C_{F1\_2}$ obtained for the two ToF measurements using the first modulation frequency, and the second value $C_2$ may correspond to the difference between the two second measurement values $C_{F2\_1}$ and $C_{F2\_2}$ obtained for the two ToF measurements using the second modulation frequency. In other words, $C_1 = C_{F1\_1} - C_{F1\_2}$ and $C_2 = C_{F2\_1} - C_{F2\_2}$ if two ToF measurements using the first modulation frequency and two ToF measurements using the second modulation frequency are performed.

The ratio value $Q$ may, e.g., be determined taking into account the exposure times for the at least one ToF measurement using the first modulation frequency and the at least one ToF measurement using the second modulation frequency in order to compensate for different exposure times. For example, the ratio value $Q$ may expressed as follows:

$$Q = \frac{C_1 \cdot E_{F2}}{C_2 \cdot E_{F1}} \qquad (4)$$

In other words, the ratio value $Q$ is determined in mathematical expression (4) further based on a ratio of the exposure time $E_{F2}$ used for the at least one ToF measurement using the second modulation frequency to the exposure time $E_{F1}$ used for the at least one ToF measurement using the second modulation frequency. The ratio value $Q$ according to mathematical expression (4) is independent of the received light intensity $I$ and the used exposure times. In general, the ratio function (ToF ratio function)

$$q(\tau) = \frac{C_1(\tau_1) \cdot E_{F2}}{C_2(\tau_2) \cdot E_{F1}} = \frac{c_{F1}(\tau_1) \cdot E_{F1} \cdot E_{F2} \cdot I}{c_{F2}(\tau_2) \cdot E_{F2} \cdot E_{F1} \cdot I} = \frac{c_{F1}(\tau_1)}{c_{F2}(\tau_2)} \qquad (5)$$

describing the ratio value $Q$ for different time shifts $\tau$ (corresponding to different distances $d$) is independent of the received light intensity $I$ and the used exposure times. In case the same exposure time is used for the at least one ToF measurement using the first modulation frequency and the at least one ToF measurement using the second modulation frequency, the exposure times in mathematical expression (3) cancel out such that the exposure times do not need to be taken into account for the ratio value $Q$ and the ratio function $q(\tau)$. It is to be noted that mathematical expression (5) refers to the case that exactly one ToF measurement using the first modulation frequency and one ToF measurement using the second modulation frequency are performed. An equivalent expression may be derived for the case that two ToF measurements using the first modulation frequency and two ToF measurements using the second modulation frequency are performed.

The estimate $\tilde{d}$ for the distance value of the pixel position is determined based on the ratio value $Q$ using a mapping function $m(Q)$. This may be expressed as follows:

$$\tilde{d} = m(Q) \qquad (6)$$

The mapping function $m(Q)$ assigns one of a plurality of candidate estimates of the distance value to the argument of the mapping function, i.e. the determined ratio value $Q$. In other words, the mapping function $m(Q)$ translates (converts) the ToF ratio $Q$ to a value $\tilde{d}$ which is linear dependent (e.g. proportional with offset) to the actual distance $d$. As described above, the distance value $d$ may be determined based on the estimate $\tilde{d}$ by applying one or more error corrections to the estimate $\tilde{d}$ of the distance value.

The mapping function $m(Q)$ is selected based on the distance range $r$ in which the distance value $d$ is likely to be. In the example of Fig. 2, the distance value $d$ may be in one of the four distance ranges 201 to 204. Similarly, the distance value $d$ may be in one of the four distance ranges 301 to 304 in the example of Fig. 3. As can be seen from Fig. 2, each of the distance ranges 201 to 204 may be unambiguously identified by the one first measurement value $C_{F1}$ obtained for the one ToF measurement using the first modulation frequency and the one second measurement value $C_{F2}$ obtained for the one ToF measurement using the second modulation frequency. The distance range $r$ in which the distance value $d$ is likely to be may, therefore, be determined based on the one first measurement value $C_{F1}$ obtained for the one ToF measurement using the first modulation frequency and the one second measurement value $C_{F2}$ obtained for the one ToF measurement using the second modulation frequency. This may be expressed as follows:

$$r = \begin{cases} 1 \; if \left( (C_{F1} > 0) and (C_{F2} > 0) \right) \\ 2 \; if \left( (C_{F1} < 0) and (C_{F2} > 0) \right) \\ 3 \; if \left( (C_{F1} > 0) and (C_{F2} < 0) \right) \\ 4 \; if \left( (C_{F1} < 0) and (C_{F2} < 0) \right) \end{cases} \qquad (7)$$

An equivalent expression may be derived for the case that two ToF measurements using the first modulation frequency and two ToF measurements using the second modulation frequency are performed.

The separation of the measurement range into certain regions guarantees that the ratio function $q(\tau)$ is strictly

monotonic decreasing or strictly monotonic increasing in each of the distance ranges 201 to 204 (and equivalently in each of the distance ranges 301 to 304 of the example of Fig. 3).

A respective mapping function $m_r(Q)$ is provided for each of the plurality of distance regions. As the ratio function $q(\tau)$ is strictly monotonic decreasing or strictly monotonic increasing in each of the plurality of distance ranges, the ratio value $Q$ may be unambiguously mapped by the respective mapping function value $\tilde{d}$ which is linear dependent (e.g. proportional with offset) to the actual distance $d$. For example, if $C_{F1} > 0$ and $C_{F2} > 0$ in the example of Fig. 2, the distance value $d$ is likely to be in the distance range 201 (i.e. $r = 1$). Accordingly, the mapping function $m(Q)$ in mathematical expression (6) is the mapping function $m_1(Q)$ for the distance range 201.

The respective mapping function $m_r(Q)$ may be determined in different ways. For example, the mapping function $m_r(Q)$ may be determined (e.g. calculated) by assuming various characteristics (properties) of the ToF sensor such as the shape of light-pulses, pixel characteristics, optics characteristics, etc. Systematic errors introduced with this approach may be mitigated (compensated) subsequently by applying one or more corresponding error corrections to the estimate $\tilde{d}$ of the distance value.

Alternatively, the respective mapping function $m_r(Q)$ may be determined based on ToF calibration measurements. For example, a reference object may be arranged at a reference distance in the scene during the ToF calibration measurements. Different time lags (shift times) between the illumination signal used for illuminating the scene and the reference signal used for capturing reflected light from the scene are used for the ToF calibration measurements. Accordingly, a discrete number of samples for the ratio function $q(\tau)$ may be collected. The samples may be normalized and associated with their respective ground-truth distance. The respective ground-truth distance may be determined (calculated) based on the adjusted time lags and the reference distance. These samples serve as the basis for establishing the respective mapping function $m_r(Q)$. For example, the samples may be arranged on the x-axis, wherein the associated ground-truth distance may be put on the y-axis. By interpolating these values, the respective mapping function $m_r(Q)$ may be obtained. The samples may, e.g., be interpolated during ToF sensing or beforehand and be stored in a lookup table. Optionally, multiple measurements may be performed and averaged for each time lag in order to remove noise. If the respective mapping function $m_r(Q)$ is derived specifically (individually) for the ToF sensor, all or at least most systematic errors which are common to the pixels of the ToF sensor may be corrected. Accordingly, error correction for wiggling errors may be omitted.

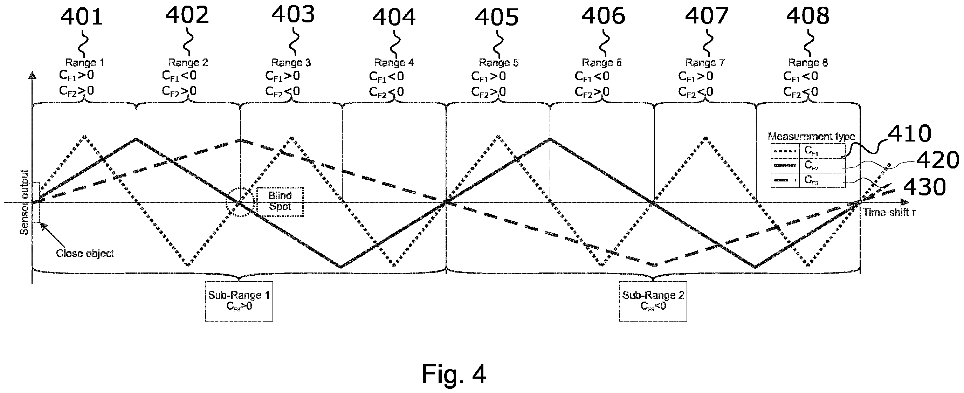

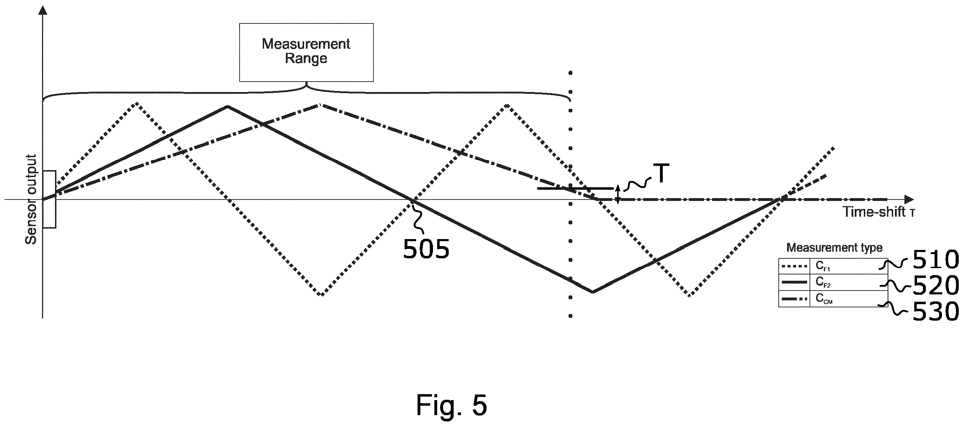

In the examples of Fig. 2 and Fig. 3, several blind spots exist. While the first blind spot at the lower end ($\tau = 0$) is wanted to suppress reflections of a close object such as a cover element, another unwanted blind spot exists at the border between the second distance range and the third distance range. As the correlation functions 210 and 220 as well as the differences between correlation functions 310 and 320, and respectively between correlation functions 330 and 340 are substantially zero at the border between the second distance range and the third distance range, no depth measurement is possible. In the following, examples for how to enable depth measurement at this blind spot will described with reference to Figs. 4 and 5.

For example, the method 100 may additionally comprise performing at least one ToF measurement using a different third modulation frequency to obtain at least one third measurement value for the pixel position. Similar to what is described above, any number of ToF measurements using the third modulation frequency may be performed. The third modulation frequency is lower than each of the first modulation frequency and the second modulation frequency. For example, the third modulation frequency may be one fourth of the first modulation frequency (and the second modulation frequency may be half of the first modulation frequency). However, also other frequency ratios may be used.

**Fig. 4** illustrates exemplary correlation functions 410, 420 and 430 for the case of performing one ToF measurement using the first modulation frequency, one ToF measurement using the second modulation frequency and one ToF measurement using the third modulation frequency. The correlation functions 410 and 420 for the one ToF measurement using the first modulation frequency and the one ToF measurement using the second modulation frequency are identical to the correlation functions 210 and 220 described above with respect to Fig. 2.

As illustrated in Fig. 4, a respective absolute value of the correlation functions 410 and 420 is substantially zero at the border between the second distance range 402 and the third distance range 403 as both correlation functions 410 and 420 exhibit a zero crossing at this distance. Since the absolute values of the correlation functions 410 and 420 are both substantially zero for this distance, ToF sensing based on only the one ToF measurement using the second modulation frequency and the one ToF measurement using the second modulation frequency is not sensitive to reflections coming from objects located at this distance. An absolute value of the correlation function 430 for the one ToF measurement using the third modulation frequency is different from zero at the border between the second distance range 402 and the third distance range 403. In the example of Fig. 4, the correlation function 430 peaks at the border between the second distance range 402 and the third distance range 403. In other words, while the correlation functions 410 and 420 are adjusted such that a respective absolute value of the correlation functions 410 and 420 is smaller than a threshold value (close to zero and, e.g., determined by the noise level of the ToF sensor) for a predetermined (desired, target) distance, the correlation function 430 is adjusted such that an absolute value of the correlation function 430 is above the threshold value for the predetermined distance (i.e. is non-zero and above the noise level of the ToF sensor). Since the correlation function 430 is non-zero at the border between the second distance range 402 and the third distance range 403, the at least one third measurement value may be used for determining the depth at the border between the second distance range 402 and the third distance range 403 such that there is no longer a blind spot at the border between the second distance range 402 and the third distance range 403. This will be explained in the following.

Similar to the first value $C_1$ for the one ToF measurement using the first modulation frequency and the second value $C_2$ for the one ToF measurement using the second modulation frequency, a third value $C_3$ for the one ToF measurement using the third modulation frequency may be determined. Since exactly one ToF measurement using the third modulation frequency is performed in the example of Fig. 4, the third value $C_3$ is the one third measurement value $C_{F3}$ obtained for the one ToF measurement using the third modulation frequency. Similar to what is described above, the at least one third measurement value $C_{F3}$ may be expressed as follows:

$$C_{F3} = c_{F3}(\tau) \cdot E_{F3} \cdot I \qquad (8)$$

In mathematical expression (8), $c_{F3}(\tau)$ denotes the correlation function of the ToF measurement using the third modulation frequency, $I$ denotes the light intensity and $E_{F3}$ denotes the exposure time for the ToF measurement using the third modulation frequency.

Similarly to what is described above for Fig. 3, if two ToF measurements are performed for each of the first modulation frequency, the second modulation frequency and the third modulation frequency, the first value $C_1$ may correspond to the difference between the two first measurement values $C_{F1\_1}$ and $C_{F1\_2}$ obtained for the two ToF measurements using the first modulation frequency, the second value $C_2$ may correspond to the difference between the two second measurement values $C_{F2\_1}$ and $C_{F2\_2}$ obtained for the two ToF measurements using the second modulation frequency and the third value $C_3$ may correspond to the difference between the two third measurement values $C_{F3\_1}$ and $C_{F3\_2}$ obtained for the two ToF measurements using the third modulation frequency. In other words, $C_1 = C_{F1\_1} - C_{F1\_2}$, $C_2 = C_{F2\_1} - C_{F2\_2}$ and $C_3 = C_{F3\_1} - C_{F3\_2}$ if two ToF measurements using the first modulation frequency, two ToF measurements using the second modulation frequency and two ToF measurements using the first modulation frequency are performed.

Similarly to what is described above for the ratio value $Q$, a second ratio value $Q_2$ and a third ratio value $Q_3$ may be determined based on the third value $C_3$. For example, the second ratio value $Q_2$ may be based on a ratio of the first value $C_1$ to the third value $C_3$, and the third ratio value $Q_3$ may be based on a ratio of the second value $C_2$ to the third value $C_3$. For example, the second and third ratio values $Q_2$ and $Q_3$ may expressed as follows:

$$Q_2 \sim \frac{C_1}{C_3} \qquad (9)$$

$$Q_3 \sim \frac{C_2}{C_3} \qquad (10)$$

Again, the exposure times for the different ToF measurements may be taken into account when determining the second and third ratio values $Q_2$ and $Q_3$. Analogously to mathematical expression (4), the second and third ratio values $Q_2$ and $Q_3$ may expressed as follows:

$$Q_2 = \frac{C_1 \cdot E_{F3}}{C_3 \cdot E_{F1}} \qquad (11)$$

$$Q_3 = \frac{C_2 \cdot E_{F3}}{C_3 \cdot E_{F2}} \qquad (12)$$

In case the same exposure time is used for the ToF measurements using the different modulation frequencies, the exposure times in mathematical expressions (9) and (10) cancel out such that the exposure times do not need to be taken into account for the second and third ratio values $Q_2$ and $Q_3$.

The numerator and the denominator in mathematical expressions (4), (11) and (12) may be reversed as they show exactly the same noise.

It is to be noted that mathematical expression (11) and (12) refer to the case that exactly one ToF measurement using the first modulation frequency, one ToF measurement using the second modulation frequency and one ToF measurement using the third modulation frequency are performed. An equivalent expression may be derived for the case that two ToF measurements using the first modulation frequency, two ToF measurements using the second modulation frequency and two ToF measurements using the third modulation frequency are performed.

Determining the estimate $\tilde{d}$ for the distance value of the pixel position is similar to what is described above. A first auxiliary estimate $\tilde{d}_1$ of the distance value is determined based on the ratio value $Q$ using the mapping function $m(Q)$. A second auxiliary estimate $\tilde{d}_2$ of the distance value is determined based on the second ratio value $Q_2$ using the mapping function $m(Q)$. A third auxiliary estimate $\tilde{d}_3$ of the distance value is determined based on the third ratio value $Q_3$ using the mapping function $m(Q)$. Due to the noise of ToF sensor, the correlation functions 410 and 420 for the ToF measurements with the first and the second modulation frequency are not exactly zero at the border between the second distance range 402 and the third distance range 403. Accordingly, also the measurement values $C_{F1}$ and $C_{F2}$ obtained for these ToF measurements will be close to zero but non-zero. Accordingly, the mapping function $m(Q)$ will be determined to be either the mapping function $m_2(Q)$ of the second distance range 402 or the mapping function $m_3(Q)$ of the third distance range 403.

As a result, three auxiliary estimates $\tilde{d}_1$, $\tilde{d}_2$ and $\tilde{d}_3$ for the distance value are obtained. The three auxiliary estimates $\tilde{d}_1$, $\tilde{d}_2$ and $\tilde{d}_3$ may be combined in various ways to the single estimate $\tilde{d}$ of the distance value. In other words, the estimate $\tilde{d}$ of the distance value is determined based on the first auxiliary estimate $\tilde{d}_1$ of the distance value, second auxiliary estimate $\tilde{d}_2$ of the distance value and the third auxiliary estimate $\tilde{d}_3$ of the distance value.

For example, the three auxiliary estimates $\tilde{d}_1$, $\tilde{d}_2$ and $\tilde{d}_3$ for the distance value may be combined by weighted averaging. For example, for each of the auxiliary estimates $\tilde{d}_1$, $\tilde{d}_2$ and $\tilde{d}_3$ for the distance value, a weighting factor may be determined based on a noise model. The noise model may receive the measurement values of all conducted ToF measurements as input and determine the respective weighting factor. Further, the weighting factors may depend on the estimated distance to the object.

In other examples, non-weighted averaging may be used (i.e. the three auxiliary estimates $\tilde{d}_1$, $\tilde{d}_2$ and $\tilde{d}_3$ for the distance value are combined without weighting). For example, the three auxiliary estimates $\tilde{d}_1$, $\tilde{d}_2$ and $\tilde{d}_3$ may first be compared to each other to see if there's blind spot in one of the ToF measurements and then only the other two ToF measurements are averaged. If the auxiliary estimate for the distance value determined for one of the ToF measurements is significantly different from the other two auxiliary estimates, this measurement may be classified as blind spot.

As can be seen from Fig. 4, the ToF measurement using the third modulation frequency further allows to extend the measurement range of the ToF sensor. In particular, the ToF measurement using the third modulation frequency allows to extend the unambiguity range. Taking into account the third measurement value $C_{F3}$ obtained for the one ToF measurement using the third modulation frequency allows to extend the number of possible distance range $r$ in which the distance value $d$ is likely to be. In the example of Fig. 4, the number of possible distance ranges and, hence, the unambiguity range is doubled compared to the example of Fig. 2 as the third modulation frequency is half of the second modulation frequency. For example, the mathematical expression (7) may be accordingly extended by adding the conditions ($C_{F3} > 0$) and ($C_{F3} < 0$). In other words, the distance range among the plurality of distance ranges in which the distance value is likely to be may further be determined based on the at least one third measurement value $C_{F3}$. Similarly to what is described above for the blind spot at the border between the second distance range 402 and the third distance range 403, the blind spot at the border between the sixth distance range 406 and the seventh distance range 407 may be filled by the ToF measurement using the third modulation frequency.

It is to be noted that the proposed technique is not limited to performing ToF measurements using three different modulation frequencies. In general, any number of ToF measurements using $n \geq 2$ modulation frequencies may be used. Using more ToF measurements with decreasing modulation frequencies may allow to cover more blind spots and, hence, extend the unambiguity range for the ToF measurement as described above. For example, the blind spot at the border between the fourth distance range 404 and the fifth distance range 405 may be filled by at least one additional ToF measurement using a fourth modulation frequency which is lower than each of the first to third modulation frequencies (e.g. the fourth modulation frequency may be one eighth of the first modulation frequency). The unambiguity range and, hence, the measurement range of the ToF sensor is determined by the lowest modulation frequency used for the ToF measurements.

As an alternative to performing more ToF measurements with lower modulation frequencies, one or more CM ToF measurements may be performed. That is, the method 100 may alternatively further comprise performing at least one CM ToF measurement in order to obtain at least one third measurement value for the pixel position. In CM ToF measurements, the scene is illuminated by the illumination element of the ToF sensor based on an illumination signal exhibiting an alternating series of high and low pulses of varying or equal duration (length). The reference signal used for driving the electronic circuitry in the ToF sensor for measuring the reflected light at the pixel position exhibits an alternating series of high and low pulses of varying duration (length). It is to be noted that the illumination signal and the reference signal used for a CM ToF measurement may be identical, time-shifted (phase-shifted) with respect to each and/or be different from each other. For each CM ToF measurement, at least one third measurement value for the pixel position is obtained. Similar to what is described above for the ToF measurements, any number of CM ToF measurements may be used.

**Fig. 5** illustrates exemplary correlation functions 510, 520 and 530 for the case of performing one ToF measurement using the first modulation frequency, one ToF measurement using the second modulation frequency and one CM ToF measurement. The correlation functions 510 and 520 for the one ToF measurement using the first modulation frequency and the one ToF measurement using the second modulation frequency are identical to the correlation functions 210 and 220 described above with respect to Fig. 2.

The correlation function 530 for the one CM ToF measurement defines the measurement range of the ToF sensor. Similar to what is described above, both correlation functions 510 and 520 exhibit a zero crossing for a distance 505 (indicated in Fig. 5 by the corresponding time shift $\tau$). Therefore, a respective absolute value of the correlation functions 510 and 520 is substantially zero for the distance 505. An absolute value of the correlation function 530 for the one CM ToF measurement is different from zero for the distance 505. In other words, while the correlation functions 510 and 520 are adjusted such that a respective absolute value of the correlation functions 510 and 520 is smaller than a threshold value (close to zero and, e.g., determined by the noise level of the ToF sensor) for a predetermined (desired, target) distance 505, the correlation function 530 is adjusted such that an absolute value of the correlation function 530 is above the threshold value for the predetermined distance (i.e. is non-zero and above the noise level of the ToF sensor). Since the correlation function 530 is non-zero for the distance 505, the at least one third measurement value may be used for determining the depth for the distance 505 such that there are no unwanted blind spots within the measurement range. This will be explained in the following.

Similar to the first value $C_1$ for the one ToF measurement using the first modulation frequency and the second value $C_2$ one ToF measurement using the second modulation frequency, a third value $C_3$ for the one CM ToF measurement may be determined. Since exactly one CM ToF measurement is performed in the example of Fig. 5, the third value $C_3$ is the one third measurement value $C_{CM}$ obtained for the one CM ToF measurement. Similar to what is described above, the at least one third measurement value $C_{CM}$ may be expressed as follows:

$$C_{CM} = c_{CM}(\tau) \cdot E_{CM} \cdot I \qquad (13)$$

In mathematical expression (13), $c_{CM}(\tau)$ denotes the correlation function of the CM ToF measurement, $I$ denotes the light intensity and $E_{CM}$ denotes the exposure time for the CM ToF measurement.

Similarly to what is described above for various examples, if two ToF measurements are performed for each of the two modulation frequencies and two CM ToF measurements are performed, the third value $C_3$ may correspond to the difference between the two measurement values $C_{CM\_1}$ and $C_{CM\_2}$ obtained for the CM ToF measurements. In other words, $C_1 = C_{F1\_1} - C_{F1\_2}$, $C_2 = C_{F2\_1} - C_{F2\_2}$ and $C_3 = C_{CM\_1} - C_{CM\_2}$ if two ToF measurements using the first modulation frequency, two ToF measurements using the second modulation frequency and two CM ToF measurements are performed.

Similar to what is described above for the example of Fig. 4, a second ratio value $Q_2$ and a third ratio value $Q_3$ may be determined based on the third value $C_3$ for the CM ToF measurement. For example, the second ratio value $Q_2$ may be based on a ratio of the first value $C_1$ to the third value $C_3$, and the third ratio value $Q_3$ may be based on a ratio of the second value $C_2$ to the third value $C_3$. For example, the second and third ratio values $Q_2$ and $Q_3$ may expressed analogously to mathematical expressions (9) and (10).

Again, the exposure times for the different measurements may be taken into account when determining the second and third ratio values $Q_2$ and $Q_3$. Analogously to mathematical expressions (11) and (12), the second and third ratio values $Q_2$ and $Q_3$ may expressed as follows:

$$Q_2 = \frac{C_1 \cdot E_{CM}}{C_3 \cdot E_{F1}} \qquad (14)$$

$$Q_3 = \frac{C_2 \cdot E_{CM}}{C_3 \cdot E_{F2}} \qquad (15)$$

In case the same exposure time is used for all measurements, the exposure times in mathematical expressions (9) and (10) cancel out such that the exposure times do not need to be taken into account for the second and third ratio values $Q_2$ and $Q_3$.

It is to be noted that mathematical expression (14) and (15) refer to the case that exactly one ToF measurement using the first modulation frequency, one ToF measurement using the second modulation frequency and one CM ToF measurement are performed. An equivalent expression may be derived for the case that two ToF measurements using the first modulation frequency, two ToF measurements using the second modulation frequency and two CM ToF measurements are performed.

Given the ratio values $Q$, $Q_2$ and $Q_3$, first to third auxiliary estimates $\tilde{d}_1$, $\tilde{d}_2$ and $\tilde{d}_3$ for the distance value may be determined analogously to what is described above with respect to the example of Fig. 4. The estimate $\tilde{d}$ for the distance value of the pixel position may be determined based on the first to third auxiliary estimates $\tilde{d}_1$, $\tilde{d}_2$ and $\tilde{d}_3$ for the distance value as described above.

The at least one CM ToF measurement is not only useful for filling unwanted blind spots in the measurement range of the ToF sensor. The at least one CM ToF measurement may also allow to avoid distance ambiguities. In particular, the at least one CM ToF measurement may allow to filter wrapped distances.

As illustrated in Fig. 5, the correlation function 530 is substantially only non-zero within the measurement range of the ToF sensor (target distance range). For example, an absolute value of the correlation function 530 may be above a threshold value (e.g. defined by the noise level of the ToF sensor) over the (entire) measurement range of the ToF sensor. Accordingly, the third value $C_3$ may be used as an indicator whether an object reflecting light back to the ToF sensor is within the measurement range of the ToF sensor (i.e. the target distance range). For example, the third value $C_3$ may be compared to a threshold value $T$ defined for the target distance range. As can be seen from Fig. 5, by adjusting the threshold level $T$, the target measurement range may be adjusted.

If the correlation function 530 is above the threshold value $T$, the distance value $d$ is likely to be in the target distance range. In other words, it may be determined that the distance value $d$ for the pixel position is likely to be in the target distance range if the third value $C_3$ satisfies a predetermined condition with respect to the threshold value $T$. In the example of Fig. 5, the predetermined condition with respect to the threshold value $T$ is that the third value $C_3$ is above the threshold value $T$.

Accordingly, the estimate $\tilde{d}$ for the distance value may only be determined if it is determined that the distance value $d$ is likely to be in the measurement range of the ToF sensor (i.e. the target distance range). If the third value $C_3$ does not satisfy the predetermined condition with respect to the threshold value $T$, i.e. if the third value $C_3$ is below the threshold value $T$ in the example of Fig. 5, it may be determined that the distance value $d$ for the pixel position is likely to be not in the target distance range. In other words, the object reflecting the light back to the ToF sensor is likely to be outside the unambiguity range of the ToF sensor. The third value $C_3$ obtained by the at least one CM ToF measurement may, hence, be used as a binary mask to filter invalid measurements.

The CM ToF measurement (i.e. the value of the correlation function 530) depends on the amount of received light. Accordingly, the measurement range of the ToF sensor (i.e. target distance range) might vary based on the reflectivity of the object in the scene and the distance to the object. This may be compensated by scaling (at least) one of the threshold value $T$ and the third value $C_3$ based on a scaling value prior to comparing it to the other one of the threshold value $T$ and the third value $C_3$. The scaling value is determined based on an estimate of the intensity of light received during the at least one ToF measurement using the first modulation frequency or the at least one ToF measurement using the second modulation frequency. For example, the estimate of the intensity of light may be a greyscale value in a greyscale image captured in addition to the at least one ToF measurement using the first modulation frequency and the at least one ToF measurement using the second modulation frequency. In other examples, the estimate of the intensity of light may be a total amount of charges obtained by the light-capturing element at the pixel position during the at least one ToF measurement using the first modulation frequency or the at least one ToF measurement using the second modulation frequency (e.g. the summed charges in buckets A and B of the PMD at the pixel position for the ToF measurement using the first modulation frequency). Accordingly, the thresholding is independent of the amount of received light.

The intensity of light $I$ received during a ToF measurement is an interesting quantity in ToF sensing not only for normalizing CM ToF measurements. The intensity of light $I$ represents how much light arrives back at a pixel. The intensity of light $I$ may, e.g., be used for generating a greyscale image used in various applications such as face recognition. For example, the intensity of light $I$ may be represented as a scalar value without a unit, which is mapped to a certain range.

According to the proposed technique, the intensity of light $I_{F1}$ received during the at least one ToF measurement using the first modulation frequency is determined based on the at least one first measurement value $C_{F1}$. Similarly, the intensity of light $I_{F2}$ received during the at least one ToF measurement using the second modulation frequency is determined based on the at least one second measurement value $C_{F2}$. Based on the determined intensity of light $I_{F1}$ received during the at least one ToF measurement using the first modulation frequency and the determined intensity of light $I_{F2}$ received during the at least one ToF measurement using the second modulation, a greyscale value for a greyscale image may be determined.

For example, if exactly one ToF measurement using the first modulation frequency and one ToF measurement using the second modulation are performed, the light intensities $I_{F1}$ and $I_{F2}$ may be determined as follows:

$$I_{F1} = \frac{C_{F1}}{c_{F1}(\tau)} \qquad (16)$$

$$I_{F2} = \frac{C_{F2}}{c_{F2}(\tau)} \qquad (17)$$

The correlation functions $c_{F1}(\tau)$ and $c_{F2}(\tau)$ are known (e.g. from calibration). The argument $\tau$ may be calculated based on the speed of light c and the estimate $\tilde{d}$ of the distance value. For example, $\tau = c \cdot \tilde{d}$.

The final light intensity $I$ may, e.g., be the average of the light intensities $I_{F1}$ and $I_{F2}$. For example, weighted averaging may be used for determining the final light intensity $I$ based on the light intensities $I_{F1}$ and $I_{F2}$. If the at least one ToF measurement using the first modulation frequency and the at least one ToF measurement using the second modulation frequency were obtained with different exposure times, the light intensities $I_{F1}$ and $I_{F2}$ may be normalized to compensate for the different exposure times. The normalization may, e.g., be done by multiplying a normalization value. The final light intensity $I$ may be used as greyscale value for a greyscale image, or greyscale value for a greyscale image may be derived from the light intensity $I$.

If two ToF measurement using the first modulation frequency and two ToF measurement using the second modulation frequency are performed, the light intensities $I_{F1}$ and $I_{F2}$ may be determined analogously taking into account both measurement values for the respective type of measurement:

$$I_{F1} = \frac{C_{F1\_1} - C_{F1\_2}}{c_{F1\_1}(\tau) - c_{F1\_2}(\tau)} \qquad (18)$$

$$I_{CW\_F2} = \frac{C_{F2\_1} - C_{F2\_2}}{c_{F2\_1}(\tau) - c_{F2\_2}(\tau)} \qquad (19)$$

Analogously to the distance (depth) calculation, the corresponding measurement values are subtracted from each other for individually calculating the light intensities for the ToF measurements using the first modulation frequency and the ToF measurements using the second modulation frequency. The correlation functions $c_{F1\_1/2}(\tau)$ and $c_{F2\_1/2}(\tau)$ are known (e.g. from calibration). The argument $\tau$ may be calculated based on the speed of light $c$ and the estimate $\tilde{d}$ of the distance value. For example, $\tau = c \cdot \tilde{d}$. The final light intensity $I$ may again be the average of the light intensities $I_{F1}$ and $I_{F2}$. Further, different exposure times may be compensated by normalization.

As can be seen from mathematical expressions (16) to (19), the intensity of light $I_{F1}$ received during the at least one ToF measurement using the first modulation frequency and the intensity of light $I_{F2}$ received during the at least one ToF measurement using the second modulation frequency may be further determined based on the estimate $\tilde{d}$ of the distance value.

The correlation functions of the at least one ToF measurement using the first modulation frequency and the at least one ToF measurement using the second modulation frequency are periodic over the distance between the ToF sensor and the object in the scene reflecting the light of the ToF sensor. Further, the correlation functions of the at least one ToF measurement using the first modulation frequency and the at least one ToF measurement using the second modulation frequency exhibit their respective extreme value (e.g. a maximum or a minimum value) between each two consecutive zero-crossings of the respective correlation function in a distance range between, e.g., 20 % to 80 %, 25 % to 75 %, 30 % to 70 %, 35 % to 65 %, 40 % to 60 %, 45 % to 55 % or 47.5 % to 52.5 %, etc. of the distance between (the distances corresponding to) the respective two consecutive zero-crossings. For example, the correlation functions of the at least one ToF measurement using the first modulation frequency and the at least one ToF measurement may exhibit a substantially triangular shape as illustrated in Figs. 2 to 5. In other examples, the correlation functions for the at least one ToF measurement using the first modulation frequency and the at least one ToF measurement may exhibit a sinusoidal like shape. The same holds for optional additional ToF measurements with decreasing modulation frequencies.

In some applications, a temperature-dependent time-shift between the illumination signal and the reference signal may occur. The time-shift is mainly due to temperature-dependent rise times of the illumination element of the ToF sensor. In order to compensate for this, similar illumination signals for the at least one ToF measurement using the first modulation frequency and the at least one ToF measurement using the second modulation frequency may be used. For example, durations of the high low pulses in the illumination signals used for driving the illumination element of the ToF sensor during the at least one ToF measurement using the first modulation frequency and the at least one ToF measurement using the second modulation frequency may vary by less than 20 %, 15%, 10 %, 5 %, etc. between the illumination signals. Accordingly, pulse spacings in time between consecutive light pulses emitted for the at least one ToF measurement using the first modulation frequency and the at least one ToF measurement using the second modulation frequency may be similar. Further, pulse durations of the light pulses emitted for the at least one ToF measurement using the first modulation frequency and the at least one ToF measurement using the second modulation frequency may be similar. As a consequence, the illumination element of the ToF sensor heats up almost the same way for the ToF measurements at both modulation frequencies such that also the effect of the temperature-dependent rise times of the illumination element is substantially the same for the ToF measurements at both modulation frequencies.

Alternatively or additionally, the above may be applied to the reference signal. In other words, durations of the high low pulses in the reference signals used for driving the light capturing element of the ToF sensor during the at least one ToF measurement using the first modulation frequency and the at least one ToF measurement using the second modulation frequency may vary by less than 20 %, 15%, 10 %, 5 %, etc. between the reference signals.

The same holds for optional additional ToF measurements with decreasing modulation frequencies.

The proposed technology may enable synergetic ToF sensing at different modulation frequencies.

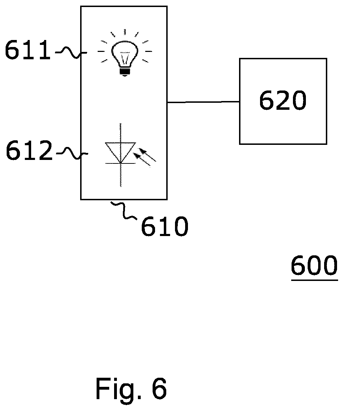

An example of an apparatus 600 for ToF sensing of a scene according to the proposed technique is further illustrated in **Fig. 6.** The apparatus 600 comprises a ToF sensor 610. The ToF sensor 610 comprises an illumination element 611 and a light capturing element 612 for performing ToF measurements according to the above described technique for ToF sensing. In particular, the ToF sensor 610 is configured to perform at least one ToF measurement using a first modulation frequency to obtain at least one first measurement value for at least one pixel position, and to perform at least one ToF measurement using a second modulation frequency to obtain at least one second measurement value for the pixel position. For example, the illumination element 611 may comprise one or more Light-Emitting Diodes, LEDs, or one or more laser diodes for illuminating the scene. The light capturing element 612 may, e.g., comprise optics, an image sensor with a plurality of pixels, and driver electronics for measuring reflected light from the scene. For example, each pixel may comprise a PMD for measuring the reflected light.

Further, the apparatus 600 comprises a processing circuit 620. For example, the processing circuit 620 may be a single dedicated processor, a single shared processor, or a plurality of individual processors, some of which or all of which may be shared, a digital signal processor (DSP) hardware, an application specific integrated circuit (ASIC) or a field programmable gate array (FPGA). The processing circuit 620 may optionally be coupled to, e.g., read only memory (ROM) for storing software, random access memory (RAM) and/or nonvolatile memory. The processing circuit 620 is configured to perform processing according to the above described technique for ToF sensing. In particular, the processing circuit 620 is configured to determine an estimate of a distance value of the pixel position based on the at least one first measurement value and the at least one second measurement value using a mapping function.

The apparatus 600 may comprise further hardware - conventional and/or custom.

The examples as described herein may be summarized as follows:

Examples relate to a method for ToF sensing of a scene. For at least one pixel position, the method comprises performing at least one ToF measurement using a first modulation frequency in order to obtain at least one first measurement value for the pixel position. Further, the method comprises for the at least one pixel position performing at least one ToF measurement using a second modulation frequency in order to obtain at least one second measurement value for the pixel position. The method additionally comprises determining an estimate of a distance value of the pixel position based on the at least one first measurement value and the at least one second measurement value using a mapping function.

In some examples, the second modulation frequency is lower than the first modulation frequency.

According to some examples, determining the estimate of the distance value comprises: determining in which distance range among a plurality of distance ranges the distance value is likely to be based on the at least one first measurement value and the at least one second measurement value; determining a ratio value based on a ratio of a first value related to the at least one first measurement value to a second value related to the at least one second measurement value; selecting the mapping function among a plurality of mapping functions based on the determined distance range; and determining the estimate of the distance value based on the ratio value using the mapping function.

In some examples, a course of a ratio of correlation functions of the at least one ToF measurement using the first modulation frequency and the at least one ToF measurement using the second modulation frequency is strictly monotonic decreasing or strictly monotonic increasing in each of the plurality of distance ranges.

According to some examples, the method further comprises for the at least one pixel position: performing at least one ToF measurement using a third modulation frequency in order to obtain at least one third measurement value for the pixel position, wherein determining the estimate of the distance value further comprises: determining a second ratio value based on a ratio of the first value to a third value related to the at least one third measurement value; and determining a third ratio value based on a ratio of the second value to the third value, and wherein determining the estimate of the distance value based on the ratio value using the mapping function comprises: determining a first auxiliary estimate of the distance value based on the ratio value using the mapping function; determining a second auxiliary estimate of the distance value based on the second ratio value using the mapping function; determining a third auxiliary estimate of the distance value based on the third ratio value using the mapping function; and determining the estimate of the distance value based on the first auxiliary estimate of the distance value, second auxiliary estimate of the distance value and the third auxiliary estimate of the distance value.

In some examples, the third modulation frequency is lower than each of the first modulation frequency and the second modulation frequency.

According to some examples, a respective absolute value of correlation functions of the at least one ToF measurement using the first modulation frequency and the at least one ToF measurement using the second modulation frequency is smaller than a threshold value for a predetermined distance and wherein an absolute value of a correlation function of the at least one ToF measurement using the third modulation frequency is above the threshold value for the predetermined distance.

In alternative examples, the method further comprises for the at least one pixel position: performing at least one CM ToF measurement in order to obtain at least one third measurement value for the pixel position; comparing a third value related to the at least one second measurement value to a threshold value defined for a target distance range; and determining that the distance value for the pixel position is likely to be in the target distance range if the third value satisfies a predetermined condition with respect to the threshold value, wherein the estimate of the distance value is only determined if it is determined that the distance value is likely to be in the target distance range, wherein determining the estimate of the distance value further comprises: determining a second ratio value based on a ratio of the first value to the third value; and determining a third ratio value based on a ratio of the second value to the third value, and wherein determining the estimate of the distance value based on the ratio value using the mapping function comprises: determining a first auxiliary estimate of the distance value based on the ratio value using the mapping function; determining a second auxiliary estimate of the distance value based on the second ratio value using the mapping function; determining a third auxiliary estimate of the distance value based on the third ratio value using the mapping function; and determining the estimate of the distance value based on the first auxiliary estimate of the distance value, second auxiliary estimate of the distance value and the third auxiliary estimate of the distance value.

According to some examples, the method further comprises determining a scaling value based on an estimate of an intensity of light received during the at least one ToF measurement using the first modulation frequency or the at least one ToF measurement using the second modulation frequency; and scaling at least one of the threshold value and the third value based on the scaling value prior to comparing it to the other one of the threshold value and the third value.

In some examples, one ToF measurement using the first modulation frequency is performed to obtain one first measurement value for the pixel position, wherein one ToF measurement using the second modulation frequency is performed to obtain second measurement value for the pixel position.

According to some examples, the first value is the one obtained first measurement value, and wherein the second value is the one obtained second measurement value.

In alternative examples, two ToF measurements using the first modulation frequency are performed to obtain two first measurement values for the pixel position, wherein two ToF measurements using the second modulation frequency are performed to obtain two second measurement values for the pixel position.

According to some examples, the first value corresponds to a difference between the two first measurement values, and wherein the second value corresponds to a difference between the two second measurement values.

In some examples, correlation functions of the two ToF measurements using the first modulation frequency are phase-shifted by 180° with respect to each other, wherein correlation functions of the two ToF measurements using the second modulation frequency are phase-shifted by 180° with respect to each other.

According to some examples, a respective absolute value of correlation functions of the at least one ToF measurement using the first modulation frequency and the at least one ToF measurement using the second modulation frequency is smaller than a threshold value for a predetermined distance.

In some examples, an element covering a ToF sensor used for the at least one ToF measurement using the first modulation frequency and the at least one ToF measurement using the second modulation frequency is arranged at the predetermined distance with respect to the ToF sensor.

According to some examples, the method further comprises: determining an intensity of light received during the at least one ToF measurement using the first modulation frequency based on the at least one first measurement value for the pixel position; determining an intensity of light received during the at least one ToF measurement using the second modulation frequency based on the at least one second measurement value for the pixel position; and determining a greyscale value for a greyscale image based on the determined intensity of light received during the at least one ToF measurement using the first modulation frequency and the determined intensity of light received during the at least one ToF measurement using the second modulation frequency.

In some examples, at least one of the intensity of light received during the at least one ToF measurement using the first modulation frequency and the intensity of light received during the at least one ToF measurement using the second modulation frequency is further determined based on the estimate of the distance value.

According to some examples, the method further comprises determining the distance value by applying at least one error correction to the estimate of the distance value.

In some examples, correlation functions of the at least one ToF measurement using the first modulation frequency and the at least one ToF measurement using the second modulation frequency are periodic.

According to some examples, correlation functions of the at least one ToF measurement using the first modulation frequency and the at least one ToF measurement using the second modulation frequency exhibit their respective extreme value between each two consecutive zero-crossings of the respective correlation function in a distance range between 20 % to 80 % of a distance between the respective two consecutive zero-crossings.

In some examples, durations of high low pulses in illumination signals used for driving an illumination element of a ToF sensor during the at least one ToF measurement using the first modulation frequency and the at least one ToF measurement using the second modulation frequency vary by less than 10 % between the illumination signals.

According to some examples, durations of high low pulses in reference signals used for driving a light capturing element of a ToF sensor during the at least one ToF measurement using the first modulation frequency and the at least one ToF measurement using the second modulation frequency vary by less than 10 % between the reference signals.

Other examples relate to an apparatus for ToF sensing of a scene. The apparatus comprises a ToF sensor comprising a plurality of pixels. The ToF sensor is for at least one pixel position configured to a perform at least one ToF measurement using a first modulation frequency in order to obtain at least one first measurement value for the pixel position, and to perform at least one ToF measurement using a second modulation frequency in order to obtain at least one second measurement value for the pixel position. Additionally, the apparatus comprises a processing circuit configured to determine an estimate of a distance value of the pixel position based on the at least one first measurement value and the at least one second measurement value using a mapping function.

Examples of the present disclosure may enable cover glass suppression with multi frequency ToF measurements for ToF cameras.

The aspects and features mentioned and described together with one or more of the previously detailed examples and figures, may as well be combined with one or more of the other examples in order to replace a like feature of the other example or in order to additionally introduce the feature to the other example.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

**Claims**

1. A method (100) for time-of-flight sensing of a scene, the method comprising for at least one pixel position:

   performing (102) at least one time-of-flight measurement using a first modulation frequency in order to obtain at least one first measurement value for the pixel position;

performing (104) at least one time-of-flight measurement using a second modulation frequency in order to obtain at least one second measurement value for the pixel position; and

determining (106) an estimate of a distance value of the pixel position based on the at least one first measurement value and the at least one second measurement value using a mapping function.

2. The method (100) of claim 1, wherein the second modulation frequency is lower than the first modulation frequency.

3. The method (100) of claim 1 or claim 2, wherein determining (106) the estimate of the distance value comprises:

determining in which distance range among a plurality of distance ranges the distance value is likely to be based on the at least one first measurement value and the at least one second measurement value;

determining a ratio value based on a ratio of a first value related to the at least one first measurement value to a second value related to the at least one second measurement value;

selecting the mapping function among a plurality of mapping functions based on the determined distance range; and

determining the estimate of the distance value based on the ratio value using the mapping function.

4. The method (100) of claim 3, wherein a course of a ratio of correlation functions of the at least one time-of-flight measurement using the first modulation frequency and the at least one time-of-flight measurement using the second modulation frequency is strictly monotonic decreasing or strictly monotonic increasing in each of the plurality of distance ranges.

5. The method (100) of claim 3 or claim 4, wherein the method further comprises for the at least one pixel position:

performing at least one time-of-flight measurement using a third modulation frequency in order to obtain at least one third measurement value for the pixel position,

wherein determining the estimate of the distance value further comprises:

determining a second ratio value based on a ratio of the first value to a third value related to the at least one third measurement value; and

determining a third ratio value based on a ratio of the second value to the third value, and

wherein determining the estimate of the distance value based on the ratio value using the mapping function comprises:

determining a first auxiliary estimate of the distance value based on the ratio value using the mapping function;

determining a second auxiliary estimate of the distance value based on the second ratio value using the mapping function;

determining a third auxiliary estimate of the distance value based on the third ratio value using the mapping function; and

determining the estimate of the distance value based on the first auxiliary estimate of the distance value, second auxiliary estimate of the distance value and the third auxiliary estimate of the distance value.

6. The method (100) of claim 5, wherein the third modulation frequency is lower than each of the first modulation frequency and the second modulation frequency.

7. The method (100) of claim 5 or claim 6, wherein a respective absolute value of correlation functions of the at least one time-of-flight measurement using the first modulation frequency and the at least one time-of-flight measurement using the second modulation frequency is smaller than a threshold value for a predetermined distance and wherein an absolute value of a correlation function of the at least one time-of-flight measurement using the third modulation frequency is above the threshold value for the predetermined distance.

8. The method (100) of claim 3 or claim 4, wherein the method further comprises for the at least one pixel position:

performing at least one coded modulation time-of-flight measurement in order to obtain at least one third measurement value for the pixel position;

comparing a third value related to the at least one second measurement value to a threshold value defined for a target distance range; and
determining that the distance value for the pixel position is likely to be in the target distance range if the third value satisfies a predetermined condition with respect to the threshold value,
wherein the estimate of the distance value is only determined if it is determined that the distance value is likely to be in the target distance range,
wherein determining the estimate of the distance value further comprises:

determining a second ratio value based on a ratio of the first value to the third value; and
determining a third ratio value based on a ratio of the second value to the third value, and

wherein determining the estimate of the distance value based on the ratio value using the mapping function comprises:

determining a first auxiliary estimate of the distance value based on the ratio value using the mapping function;
determining a second auxiliary estimate of the distance value based on the second ratio value using the mapping function;
determining a third auxiliary estimate of the distance value based on the third ratio value using the mapping function; and
determining the estimate of the distance value based on the first auxiliary estimate of the distance value, second auxiliary estimate of the distance value and the third auxiliary estimate of the distance value.

9. The method (100) of claim 8, further comprising:

determining a scaling value based on an estimate of an intensity of light received during the at least one time-of-flight measurement using the first modulation frequency or the at least one time-of-flight measurement using the second modulation frequency; and
scaling at least one of the threshold value and the third value based on the scaling value prior to comparing it to the other one of the threshold value and the third value.

10. The method (100) of any of claims 1 to 9, wherein one time-of-flight measurement using the first modulation frequency is performed to obtain one first measurement value for the pixel position, and wherein one time-of-flight measurement using the second modulation frequency is performed to obtain second measurement value for the pixel position.

11. The method (100) of any of claims 1 to 9, wherein two time-of-flight measurements using the first modulation frequency are performed to obtain two first measurement values for the pixel position, and wherein two time-of-flight measurements using the second modulation frequency are performed to obtain two second measurement values for the pixel position.

12. The method (100) of any of claims 1 to 11, wherein a respective absolute value of correlation functions of the at least one time-of-flight measurement using the first modulation frequency and the at least one time-of-flight measurement using the second modulation frequency is smaller than a threshold value for a predetermined distance.

13. The method (100) of any of claims 1 to 12, further comprising:

determining an intensity of light received during the at least one time-of-flight measurement using the first modulation frequency based on the at least one first measurement value for the pixel position;
determining an intensity of light received during the at least one time-of-flight measurement using the second modulation frequency based on the at least one second measurement value for the pixel position; and
determining a greyscale value for a greyscale image based on the determined intensity of light received during the at least one time-of-flight measurement using the first modulation frequency and the determined intensity of light received during the at least one time-of-flight measurement using the second modulation frequency.

14. The method (100) of claim 13, wherein at least one of the intensity of light received during the at least one time-of-flight measurement using the first modulation frequency and the intensity of light received during the at least one time-of-flight measurement using the second modulation frequency is further determined based on the estimate of the distance value.

**15.** An apparatus (600) for time-of-flight sensing of a scene, comprising:

a time-of-flight sensor (610) comprising a plurality of pixels, wherein the time-of-flight sensor (610) is for at least one pixel position configured to:

perform at least one time-of-flight measurement using a first modulation frequency in order to obtain at least one first measurement value for the pixel position; and
perform at least one time-of-flight measurement using a second modulation frequency in order to obtain at least one second measurement value for the pixel position; and

a processing circuit (620) configured to determine an estimate of a distance value of the pixel position based on the at least one first measurement value and the at least one second measurement value using a mapping function.

performing at least one time-of-flight measurement using a first modulation frequency

102

performing at least one time-of-flight measurement using a second modulation frequency

104

100

determining an estimate of a distance value

106

Fig. 1

Fig. 2

**Fig. 3**

Fig. 4

Fig. 5

611

612

610

600

Fig. 6

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/313376 A1 (VAN NIEUWENHOVE DANIEL [BE] ET AL) 23 October 2014 (2014-10-23) * paragraphs [0016], [0046] - [0048], [0075], [0085] - [0092]; claim 1 * ----- | 1-15 | INV. G01S17/894 G01S7/4915 G01S17/36 |
| A | US 2004/135992 A1 (MUNRO JAMES F [US]) 15 July 2004 (2004-07-15) * paragraphs [0098], [0231] - [0258] * ----- | 1-15 | |

TECHNICAL FIELDS
SEARCHED     (IPC)

G01S

The present search report has been drawn up for all claims

| Place of search | Date of completion of the search | Examiner |
|---|---|---|
| Munich | 2 February 2021 | Grübl, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 19 4819

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2021

| Patent document cited in search report | | | Publication date | Patent family member(s) | | | Publication date |
|---|---|---|---|---|---|---|---|
| US 2014313376 | A1 | | 23-10-2014 | CN | 103998949 | A | 20-08-2014 |
| | | | | EP | 2729826 | A1 | 14-05-2014 |
| | | | | JP | 6246131 | B2 | 13-12-2017 |
| | | | | JP | 2015501927 | A | 19-01-2015 |
| | | | | KR | 20140057625 | A | 13-05-2014 |
| | | | | US | 2014313376 | A1 | 23-10-2014 |
| | | | | WO | 2013104717 | A1 | 18-07-2013 |
| US 2004135992 | A1 | | 15-07-2004 | AU | 2003295944 | A1 | 04-02-2005 |
| | | | | EP | 1576385 | A2 | 21-09-2005 |
| | | | | JP | 2006521536 | A | 21-09-2006 |
| | | | | US | 2004135992 | A1 | 15-07-2004 |
| | | | | US | 2008100822 | A1 | 01-05-2008 |
| | | | | WO | 2005008271 | A2 | 27-01-2005 |

EPO FORM P0459

For more details about this annex : see Official Journal of the European Patent Office, No. 12/82